# EUROPEAN PATENT SPECIFICATION

(11) **EP 4 208 911 B1**
(45) Date of publication and mention of the grant of the patent: **06.05.2026**
(21) Application number: 21864911.9
(22) Date of filing: 24.08.2021
(51) Int. Cl.: H01M 10/613, H01M 10/643, H01M 10/6556, H01M 10/6554, H01M 50/202, H01M 50/213

(54) **COOLING ASSEMBLY FOR USE IN A BATTERY MODULE ASSEMBLY**
KÜHLANORDNUNG ZUR VERWENDUNG IN EINER BATTERIEMODULANORDNUNG
ENSEMBLE DE REFROIDISSEMENT POUR UTILISATION DANS UN ENSEMBLE MODULE DE BATTERIE

(30) Priority: 04.09.2020 US 202016948141
(43) Date of publication of application: 12.07.2023
(60) Divisional application: 26169964.9
(73) Proprietor: Beta Air, LLC, South Burlington, Vermont 05403 (US)
(72) Inventor: DONOVAN, Sean, Richard, Richmond, Vermont 05477 (US)
(74) Representative: Appleyard Lees IP LLP
(86) International application number: PCT/US2021/047321
(87) International publication number: WO 2022/051134

(56) References cited:
- US-A1- 2009 148 754
- US-A1- 2011 033 742
- US-A1- 2012 249 079
- US-A1- 2013 040 175
- US-A1- 2019 054 814
- US-A1- 2019 081 370

## Description

This application claims priority to U.S. patent application Ser. No. 16/948,141, filed on September 4, 2020 "COOLING ASSEMBLY FOR USE IN A BATTERY MODULE ASSEMBLY".

### FIELD OF THE INVENTION

The present invention generally relates to the field of electric aircraft and electric aircraft battery assemblies. In particular, the present invention is directed to a cooling assembly for use in a battery module assembly.

### BACKGROUND

In electric multi-propulsion systems of aircrafts (e.g. electric vertical take-off and landing (eVTOL) aircrafts), energy-dense battery packs are utilized in powering these aircrafts. Fast charging of these energy-dense battery packs can generate a significant amount of heat which can have critical failure effects on the battery pack and surrounding aircraft components. Existing systems and methods for mitigating the excess heat require liquid cooling and/or complex ground equipment, such as cold plates, misting equipment, or large forced air equipment. Complex ground equipment is not easily transported onto or off of an elevated landing pad and requires the set-up and removal of the equipment for each takeoff and landing of an aircraft on the landing pad.
US20090148754 A1 discloses a device for housing electrochemical cells.

### SUMMARY OF THE DISCLOSURE

According to the present invention there is provided an apparatus and method as set forth in the appended claims. Other features of the invention will be apparent from the dependent claims, and the description which follows.

These and other aspects and features of non-limiting embodiments of the present invention will become apparent to those skilled in the art upon review of the following description of specific non-limiting embodiments of the invention in conjunction with the accompanying drawings.

### BRIEF DESCRIPTION OF THE DRAWINGS

For the purpose of illustrating the invention, the drawings show aspects of one or more embodiments of the invention. However, it should be understood that the present invention is not limited to the precise arrangements and instrumentalities shown in the drawings, wherein:
FIG. 1A-B are perspective drawings illustrating a battery module assembly comprising a cooling assembly, according to embodiments;
FIG. 2 is a perspective view illustrating a battery unit, according to embodiments;
FIG. 3A-B are perspective drawings illustrating a cooling plate, according to embodiments;
FIG. 4 is a perspective view illustrating an assembly including an adapter pin and a sense board, according to embodiments;
FIG. 5 is a prospective view illustrating a cell retainer, according to embodiments;
FIG. 6 is an isometric view illustrating an example embodiment of an eVTOL aircraft;
FIG. 7 is a block diagram of a computing system that can be used to implement any one or more of the methodologies disclosed herein and any one or more portions thereof.

The drawings are not necessarily to scale and may be illustrated by phantom lines, diagrammatic representations and fragmentary views. In certain instances, details that are not necessary for an understanding of the embodiments or that render other details difficult to perceive may have been omitted.

### DETAILED DESCRIPTION

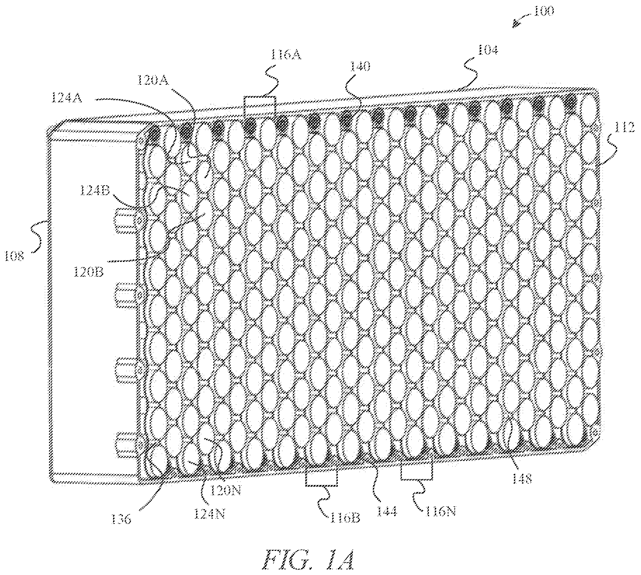

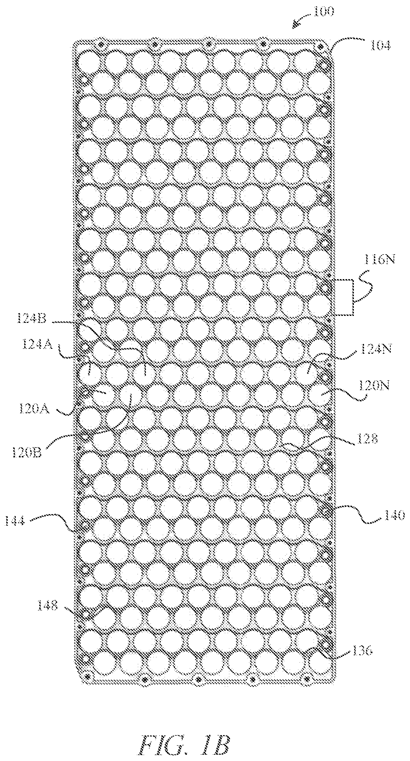

In the following description, for the purposes of explanation, numerous specific details are set forth in order to provide a thorough understanding of the present invention. It will be apparent, however, that the present invention may be practiced without these specific details. As used herein, the word "exemplary" or "illustrative" means "serving as an example, instance, or illustration." Any implementation described herein as "exemplary" or "illustrative" is not necessarily to be construed as preferred or advantageous over other implementations. All of the implementations described below are exemplary implementations provided to enable persons skilled in the art to make or use the embodiments of the disclosure and are not intended to limit the scope of the disclosure, which is defined by the claims. For purposes of description herein, the terms "upper", "lower", "left", "rear", "right", "front", "vertical", "horizontal", and derivatives thereof shall relate to the invention as oriented in FIG. 1. Furthermore, there is no intention to be bound by any expressed or implied theory presented in the preceding technical field, background, brief summary or the following detailed description. It is also to be understood that the specific devices and processes illustrated in the attached drawings, and described in the following specification, are simply embodiments of the inventive concepts defined in the appended claims. Hence, specific dimensions and other physical characteristics relating to the embodiments disclosed herein are not to be considered as limiting, unless the claims expressly state otherwise.

At a high level, aspects of the present disclosure are directed to a cooling assembly for use in a battery module assembly. In an embodiment, the integrated battery cooling assembly may facilitate the flow of a gas, wherein the flow of gas is to cool the battery module. In this way, a fast-deployable assembly to remove heat from a battery module during recharging is achieved. The integrated battery cooling assembly may enable an electric aircraft battery module to maintain a sufficient temperature during recharging, wherein the sufficient temperate allows the electric aircraft to begin a flight missing immediately after battery charging is complete. In an embodiment, the integrated battery cooling assembly may be integrated in an electric vehicle.

Referring now to the drawings, FIG. 1A-B illustrate perspective views of a battery module assembly with a cooling assembly disposed therein 100. The configuration of system 100 is merely exemplary and should in no way be considered limiting. Assembly 100 is configured to facilitate the flow of a gas to cool the battery module. Assembly 100 can include a battery module 104, a first side of the battery module 108, a second opposite and opposing side of the battery module 112, a battery unit 116A-N, a plurality of first battery cells 120A-N, a plurality of second battery cells 124A-N, cooling plate 136, cooling pipe 140, second cooling pipe 144, mounting channel 148, void space 128, protective wrapping 132, or any combination thereof.

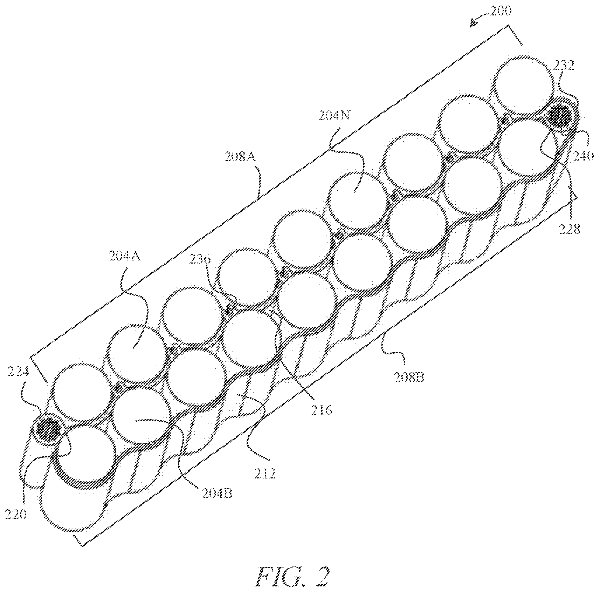

Still referring to FIGS. 1A-B, assembly 100 is designed and configured to include battery module 104. Battery module 104 is configured to include a first side 108 and a second side 112, wherein the second side 112 is opposite and opposing the first side 108. The first side 108 and the second side 112 may be include effectively parallel planes, wherein the first side 108 and the second side 112 are disposed such that they are directly opposite and oppose each other. Battery module 104 can also include one or more battery units 116A-N. Battery module 104 is configured to house and/or encase at least a portion of each battery unit 116A-N. Battery units 116A-N may be configured to be contained within the battery module 104, wherein each battery unit 116A-N is disposed between the first side 108 and the second side 112. As an exemplary embodiment, FIG. 1A-B illustrates 14 battery units 116A-N housed within battery module 104, however, a person of ordinary skill in the art would understand that any number of battery units 116A-N may be housed within battery module 104. In embodiments, each battery unit 116A-N is configured to provide power to at least a portion of an aircraft such as an eVTOL and can include one or more battery cells 120A-N. According to embodiments, each battery cell 120A-N may be effectively parallel relative to one another. In the embodiment of FIGs. 1A-B, one or more battery cells 120A-N are in contact with a first side of a cooling plate, as described in further detail below in reference to FIGs. 2-3B. A "battery cell" as described herein, is a single anode and cathode separated by electrolyte, wherein the cell produces voltage and current. Each battery cell 120A-N may have a shape, such as a cylinder, and may include a radius. Each battery cell 120A-N can comprise an electrochemical reaction configured to produce electrical energy. For example and without limitation, the electrical energy produced by one or more battery cells 120A-N may be sufficient to power at least a portion of an electric aircraft, such as an eVTOL aircraft. Each battery cell 120A-N may comprise a primary battery or a secondary battery. Each battery cell 120A-N may include electrochemical cells, galvanic cells, electrolytic cells, fuel cells, flow cells, voltaic cells, and/or any combination thereof. The electrolyte of each battery cell 120A-N may include any material, such as a liquid electrolyte or a paste electrolyte. For example and without limitation, the electrolyte of each battery cell 120A-N may include molten salt or ammonium chloride. Persons skilled in the art, upon reviewing the entirety of this disclosure, will be aware of various cells that may be used as the plurality of battery cells consistently with this disclosure.

With continued reference to FIGs. 1A-B, battery cells 120A-N may be arranged in any configuration. In embodiments, each battery unit 116A-N may contain any number of battery cells 120A-N arranged in any number rows and any number of columns. For example and without limitation, a battery unit 116 may include nine rows of battery cells and two columns, wherein there are 18 total battery cells within the battery unit 116. As a further example and without limitation, a battery unit 116 may include six rows of battery cells and four columns so that there are 24 total battery cells 120 within the battery unit 116. Though the illustrated embodiments of FIGs. 1A-B present one arrangement for battery units 116A-N, one of skill in the art will understand that any number of arrangements may be used.

Continuing to refer to FIGS. 1A-B, each battery cell 120 of a respective battery unit 116 may be electrically connected, wherein the electrical connection may be in series, parallel, and/or any combination thereof. In the entirety of this disclosure, the term 'wired' may be appreciated by a person of ordinary skill in the art to be synchronous with 'electrically connected'. Further, a person or ordinary skill in the art would understand that there are many ways to couple electrical elements together and any of the means to couple electrical elements may be used to electrically couple battery cells 120 of a respective battery unit 116. Battery cells 120A-N that are connected in series may include, for example and without limitation, wiring a first terminal of a first battery cell to a second terminal of a second battery cell and further configured to comprise a single conductive path for electricity to flow while maintaining the same current (measured in Amperes) through any component in the circuit. As a further example and without limitation, battery cells 120A-N connected in parallel may include wiring a first and second terminal of a first battery cell to a first and second terminal of a second battery cell and further configured to comprise more than one conductive path for electricity to flow while maintaining the same voltage (measured in Volts) across any component in the circuit. As another non-limiting example, battery cells 120A-N may be wired in a series-parallel circuit, wherein the characteristics of a series circuit and the characteristics of a parallel circuit are combined. Further, as a non-limiting example, battery cells 120A-N may be electrically connected in an arrangement, wherein the arrangement provides an electrical advantage, such as high-voltage application, high-current applications, and the like. Persons skilled in the art, upon reviewing the entirety of this disclosure, will be aware of various arrangements of battery cells that may be used as the configuration of the plurality of battery cells consistently with this disclosure.

Continuing to refer to FIGS. 1A-B, each battery unit 116A-N may include a void space 128. Void space 128 may be formed by the disposition of two battery units 116. For example, battery cells 120 may be disposed in a line, column, and/or row, such that each line, column, and/or row is a predetermined distance apart, wherein a respective void space 128 is formed between the respective battery cells 120 in the line, column and/or row. Void space 128, in an embodiment and without limitation, can be configured to allow a gas to pass through the void space, such that the gas is to pass by each battery cell 120 in contact with the void space 128. The movement of a gas through the void space 128 can facilitate cooling of each battery cell 120 in contact with void space 128. For example and without limitation, the movement of a gas though void space 120 may facilitate the cooling of each respective battery cell 120 connected to a surface of a first battery unit 116 and each respective battery cell 120 connected to a surface of a second battery unit 116, wherein battery cells 120 of the first and second battery units 116 are in contact with void space 128. For example and without limitation the gas configured to pass through void space 128 may include compressed air.

Still referring to FIGs. 1A-B, each battery unit 116A-N may include a protective wrapping 132. Protective wrapping 132 may be disposed such that it surrounds at least a portion of the plurality of first battery cells 120A-N and/or second battery cells 124A-N. Surrounding a portion of first battery cells 120A-N and/or second battery cells 124A-N, for example and without limitation, may include surrounding first battery cells 120 and second battery cells 124 coupled to a first surface of cooling plate 136, a second surface of cooling plate 136, and/or any combination thereof. As a further example and without limitation, surrounding first battery cells 120A-N and second battery cells 124A-N may include weaving protective wrapping 132 between two or more rows and/or columns of the first battery cells 120A-N and/or second battery cells 124A-N. Further, as a non-limiting example, protective wrapping 132 may be woven along the circumference of the long axis of at least a portion of each battery cell 120A-N, such that the protective wrapping may create a protective loop surrounding each battery cell 120. As a further non-limiting example, protective wrapping 132 may be woven serpentine in and out of two or more rows of battery cells 120 such that each battery cell of a portion of battery cells 120 are captured in a respective own loop formed by protective wrapping 132. Protective wrapping 132 may be configured to weave from one side of a battery cell 120 to the opposite side of the adjacent battery cell 120, such that protective wrapping 132 travels in between the adjacent battery cells. Protective wrapping 132 is configured to thermally insulate two or more battery cells 120 from one another and/or outside thermal elements. Protective wrapping 132 may be further configured to prevent thermal runaway due to heat energy generated by each battery cell 120. Protective wrapping 132 may be composed of a fire protection material configured to contain a fire in the area in which it surrounds. Fire protection materials, as described in the entirety of this disclosure, may comprise fire-retardant materials, fire-resistant materials, and/or any combination thereof. Fire-retardant materials are designed to burn slowly and therefore slow down the movement of fire through the medium of the material, wherein slowing the movement protects components on the other side in enough time for countermeasures to be deployed, amongst other mitigation methods for containing and/or putting out the fire. Fire-resistant materials are configured to resist burning and withstand heat and in the application of protective material 128, wherein the fire-resistant materials may contain fire and heat energy in the location it is present preventing the fire from damaging other locations in battery unit 116, battery module 104, and/or surrounding areas. For example and without limitation, the fire protection materials of protective wrapping 125 may include aramids, FR cotton, coated nylon, carbon foam (CFOAM), polyhydroquinone, dimidazopyridine, melamine, modacrylic, leather, Polybenzimidazole (PBI), and the like, and/or any combination thereof. Protective wrapping 132, as a further example and without limitation, may include commercially available products, such as, duct insulation, for example Fyrewrap^{®}, mica, and the like. Persons skilled in the art, upon reviewing the entirety of this disclosure, will be aware of various materials that may be used as the protective wrapping consistently with this disclosure.

With continued reference to FIGs. 1A-B, each battery unit 116A-N may include a respective cooling plate 136. In embodiments, cooling plate 136 can include a first surface and a second opposite, opposing surface with a thickness between the first and second surfaces. Further, cooling plate 136 can include a first and second opposite, opposing ends. A "cooling plate" as described herein, is a thermally conductive component separating each column of battery cells 120 within a respective battery unit 116. Cooling plate 136 is configured to include a first end and a second end, wherein the second end is opposite the first end of cooling plate 136. For example and without limitation, in the illustrated embodiment of FIGS. 1A-B, cooling plate 136 is disposed such that it separates the two columns of battery cells 120 within a battery unit 116, each column contains nine battery cells. According to embodiments, cooling plate 136 may have a height that is equal to or less than the height of one or more battery cells 120A-N. In embodiments, cooling plate 136 may be composed of any suitable material. In an embodiment, cooling plate 136 may be composed utilizing aluminum. For example and without limitation, cooling plate 136 may be composed utilizing a plurality of manufacturing processes, such as extrusion, casting, subtractive manufacturing processes, and the like. As a further non-limiting example, cooling plate 136 may be composed utilizing injection molding. Injection molding may comprise injecting a liquid material into a mold and letting the liquid material solidify, taking the shape of the mold in a hardened form, the liquid material may include liquid crystal polymer, polypropylene, polycarbonate, acrylonitrile butadiene styrene, polyethylene, nylon, polystyrene, polyether ether ketone, and the like, and/or any combination thereof. Cooling plate 136 may be configured to facilitate the flow of a gas through the plurality of battery cells 120A-N. By facilitating the flow of a gas through one or more first cooling pipes 140 and/or one or more second cooling pipes 144, cooling plate 136 can be configured to cool assembly 100. In a non-limiting example, one or more first cooling pipes 140 and/or one or more second cooling pipes 144 may be configured to facilitate the flow of a liquid, wherein the liquid is configured to cool assembly 100, such that the heat generated by assembly 100 is stripped away. In embodiments, cooling plate 136 may be disposed in a battery unit 116 such that cooling plate 136 separates each battery cell 120 within the battery unit 116. In a non-limiting embodiment, by separating each battery cell 120 within a battery unit 116, cooling plate 136 is configured to allow a gas to flow in between each battery cell 120 in the battery unit 116. In embodiments, the gas may include, for example, compressed air. In a further non-limiting embodiment, the gas may include, for example, forced air system utilizing air intakes and/or fans. In embodiments, cooling plate 136 may be configured to couple to at least a portion of a respective battery unit 116A-N. Further, in embodiments, cooling plate 136 may be configured to couple to at least a portion of battery module 104. For example, cooling plate 136 may be configured to couple to a first side, second side, and/or any combination thereof of battery module 104. Coupling may include a mechanical fastening, without limitation, such as nuts, bolts, other fastening devices, and/or any combination thereof. Coupling may further include welding, casting, and/or the like. Persons skilled in the art, upon reviewing the entirety of this disclosure, will be aware of various means of joining that may be used coupling consistently with this disclosure.

Continuing to refer to FIGs. 1A-B, cooling plate 136 may include one or more cooling pipes 140 disposed on a first end of cooling plate 136. Cooling plate 136 may further include one or more second cooling pipes 144 disposed on a second end of cooling plate 136. A "cooling pipe" as described herein is a component disposed at an end of cooling plate 136. Cooling pipe 140 and/or second cooling pipe 144 is configured to have a hollow shape comprising one or more sides, at least two ends (e.g. a top and a bottom), and a length, wherein the hollow shape comprises a void having a shape the same as or different from the shape of the cooling pipe 144 and starting at a first end of the cooling pipe 144 and terminating at an opposite, opposing second end of the shape. For example and without limitation, in the illustrative embodiment of FIGs. 1A-B, cooling pipe 140 and second cooling pipe 144 comprise a tubular shape. The void of cooling pipe 140 and second cooling pipe 144 are configured to form the hollow opening of cooling pipe 140 and/or second cooling pipe 144. In embodiments, the tubular component runs effectively parallel to each battery cell 120. In embodiments, cooling pipe 140 can be disposed such that it forms a void originating at a first side 108 of the battery module 104 and terminating at the second, opposite, and opposing side, of the battery module 104. According to embodiments, cooling pipe 140 may be composed utilizing any suitable material. For example and without limitation, cooling pipe 140 may be composed of polypropylene, polycarbonate, acrylonitrile butadiene styrene, polyethylene, nylon, polystyrene, polyether ether ketone, and the like.

In embodiments, cooling pipe 140 may be disposed in battery module 104 such that cooling pipe 140 is configured to allow the travel of a gas from a first side 108 of battery module 104 to the second, opposite, and opposite side 112 of the battery module 104. For example, cooling pipe 140 can be disposed to allow the passage of gas through the hollow opening/void of cooling pipe 140. The gas may include any gas as described in the entirety of this disclosure. The hollow opening of cooling pipe 140 may be configured to be of any size and/or diameter. For example and without limitation, the hollow opening cooling pipe 140 may be configured to have a diameter that is equal to or less than the radius of each battery cell 120A-N. Cooling pipe 140 may have a length equal or less than the length of one or more battery cells 120A-N such that cooling pipe 140 is configured to not exceed the height of batteries 120A-N. Cooling pipe 140 can be configured to be disposed at each end of a cooling plate 136, wherein cooling pipe 140 may be in contact with each battery cell 120 in a respective battery unit 116 located at the end of each column and/or row of the battery unit 116. For example and without limitation, in the illustrative embodiment of FIGs. 1A-B, a battery unit 116 can contain two columns with nine rows of battery cells 120 and cooling pipe 140 and/or second cooling pipe 144 on each end of a cooling plate 136 that is in contact with a respective battery cell 120 at the end of each of the two columns. Persons skilled in the art, upon reviewing the entirety of this disclosure, will be aware of various components that may be used as at least a cooling pipe consistently with this disclosure.

Still referring to FIGS. 1A-B, in embodiments cooling plate 136 can include one or more mounting channels 148. A "mounting channel" as described herein, is a component disposed on a respective cooling plate 136 and is located in between two or more battery cells 120A-N. In embodiments, mounting channel 148 can extend the entire length cooling plate 136. In embodiments, mounting channel 148 can be disposed such that it separates each battery cell 120 in contact with a first surface of a respective cooling plate 136. Separating battery cells 120A-N may include maintaining a fixed distance of void space between the respective battery cells 120A-N adjacent to each other on the same surface of a respective cooling plate 136. For example and without limitation, mounting channel 148 may be configured to keep a fixed distance of 1cm of void space between each first battery cell 120 aligned along the first surface of a respective cooling plate 136. As a further example and without limitation, mounting channel 148 may be configured to keep a fixed distance of 1cm of void space between each battery cell 120 aligned along the second surface of a respective cooling plate 136. Mounting channel 148 may be composed utilizing any suitable material. In an embodiment, mounting channel 148 may be composed utilizing any thermally conductive material. For example and without limitation, mounting channel 148 may be composed of aluminum, polypropylene, polycarbonate, acrylonitrile butadiene styrene, polyethylene, nylon, polystyrene, polyether ether ketone, and the like. In embodiments, mounting channel 148 can include an opening extending from the from the first side 108 of battery module 104 to the second, opposite, and opposing side 112 of battery module 104. For example and without limitation, mounting channel 148 may be disposed with battery module 104 such that it is configured to carry or allow the passage of a gas from the first side 108 of battery module 104 to the second, opposite, and opposing side 112 of battery module 104, wherein the gas can pass through the opening of mounting channel 148. The opening of mounting channel 148 may be configured to be any size diameter, wherein the diameter of the opening of mounting channel 148 correlates to the length of void space between each battery cell 120 on the same surface of cooling plate 124. For example and without limitation, the hollow opening of mounting channel 148 may be configured to have a diameter that is equal to an eighth of the total diameter of each battery cell 120A-N. In embodiments, mounting channel 148 may have a length equal to or less than the length of one or more battery cells 120A-N such that mounting channel 148 can be configured to not exceed the height of each battery cell 120. Persons skilled in the art, upon reviewing the entirety of this disclosure, will be aware of components that may be used as a mounting channel consistently with this disclosure.

Still referring to FIGS. 1A-B, mounting channel 148 may be disposed, as a non-limiting example, within battery module 104 such that it is configured to carry gas from the first side 108 of the battery module 104 to the second side 112 of the battery module 104, with the gas passing through the opening of the mounting channel 148. For example and without limitation, the gas may include any gas as described in the entirety of this disclosure. Further as a non-limiting example, mounting channel 148 can be disposed such that it is configured to carry gas to void space 128, wherein the flow to void space 128 will reduce the temperature of one or more battery cells 120A-N to prevent overheating. As a further example and without limitation, mounting channel 148 can be configured to facilitate alignment of one or more battery cells 120A-N. In embodiments, mounting channel 148 is configured to include a slit, wherein the slit is positioned opposite the connection of mounting channel 148 to cooling plate 136. The "slit" as described herein, is an opening in the mounting channel component wherein the opening facilitates the flow of a gas to void space 128 of battery module 104. The slit can be configured to extend along the length of the opening of mounting channel 148 from the first side 108 of battery module 104 to the second side 112 of battery module 104. The slit may include any configuration along mounting channel 148 extending from the first side 108 of battery module 104 to the second opposite and opposing side 112 of battery module 104. For example and without limitation, the slit may include a linear slit wherein the slit is effectively parallel to each battery cell 120A-N and cooling pipe 140. As a further example and without limitation, the slit may include an oscillating slit, wherein the slit oscillates from the first side 108 of the battery module 104 to the second side 112 of the battery module 104 such that the center axis of the oscillating line is effectively parallel to each battery cell 120 and cooling pipe 140. Persons skilled in the art, upon reviewing the entirety of this disclosure, will be aware of configurations of an opening in the mounting channel that may be used as the slit consistently with this disclosure.

Referring now to FIG. 2, a perspective view of an embodiment battery unit 200 is illustrated. Battery unit 200 may be configured to include similar and/or the same as battery units 116A-N. Battery unit 200 may be configured to couple to one or more other battery units, wherein the combination of two or more battery units 200 forms at least a portion of battery module 104. Battery unit 200 is configured to include a plurality of battery cells 204A-N. The plurality of battery cells 204A-N may include any battery cell as described in the entirety of this disclosure. In the instant embodiment, for example and without limitation, battery unit 200 includes a first column 208A of battery cells 204A-N, wherein first column 208A of battery cells 204A-N is in contact with the first side of the cooling plate, as described in further detail below. As a non-limiting example, column 208A of battery cells 204A-N is configured to contain nine rows of battery cells. Further, in the instant embodiment, for example and without limitation, battery unit 200 includes a second column 208B of battery cells 204A-N, wherein second column 208B of battery cells 204A-N is in contact with the second side of the cooling plate, as described in further detail below. As a non- limiting example, column 208B of battery cells 204A-N is configured to contain nine rows of battery cells. In the embodiment of FIG. 2, battery unit 200 is configured to contain eighteen battery cells 204A-N in column 208A and column 208B. Battery cells 204A-N of battery unit 200 may be arranged in any configuration, such that battery unit 200 may contain any number of rows of battery cells and any number of columns of battery cells. Though the illustrated embodiment of FIG. 2 present one arrangement for battery unit 200, one of skill in the art will understand that any number of arrangements may be used. In embodiments, battery unit 200 may contain any offset of distance between first column 208A of battery cells 204A-N and second column 208B of battery cells 204AN, wherein the battery cells 204A-N of first column 208A and the battery cells 204A-N of second column 208B are not centered with each other. In the instant embodiment, for example and without limitation, battery unit 200 includes first column 208A and adjacent second column 208B each containing nine battery cells 204A-N, each battery cell 204 of first column 208A and each battery cell 204 of second column 208B are shifted a length measuring the radius of a battery cell, wherein the center of each battery cell 204 of first column 208A and each battery cell 204 of second column 208B are separated from the center of the battery cell in the adjacent column by a length equal to the radius of the battery cell. As a further example and without limitation, each battery cell of 204 of first column 208A and each battery cell 204 of second column 208B are shifted a length measuring a quarter the diameter of each battery cell, wherein the center of each battery cell of first column 208A and each battery cell of second column 208B are separated from the center of a battery cell in the adjacent column by a length equal to a quarter of the diameter of the battery cell. First column 208A of battery cells 204A-N and second column 208B of battery cells 204A-N of the at least a battery unit 116A-N may be configured to be fixed in a position by utilizing a cell retainer, as described in the entirety of this disclosure. The arrangement of the configuration of each battery cell 204A-N of first column 208A and each battery cell 204A-N of second column 208B of battery unit 200 in FIG. 2 is a non-limiting embodiment and in no way precludes other arrangements of each battery cell 204A-N of first column 208A and/or second column 208B. Each battery cell 204A-B may be connected utilizing any means of connection as described in the entirety of this disclosure. Persons skilled in the art, upon reviewing the entirety of this disclosure, will be aware of electrical connections that may be used as to connect each battery cell consistently with this disclosure.

With continued reference to FIG. 2, in embodiments, battery unit 200 can include protective wrapping 212. Protective wrapping 212 may include any protective wrapping as described above in further detail in reference to FIGs. 1A-B. Protective wrapping 212 may be configured to surround each battery cell 204A-n of first column 208A and/or second column 208B. Protective wrapping 212 may be configured to surround battery cells 204A-N in any means of surrounding as described above in detail in reference to FIGs. 1A-B. In the instant embodiment, protective wrapping 212, as a non-limiting example, is surrounding each battery cell 204 coupled to the first surface of cooling plate 216. Protective wrapping 212 may be secured to any component of battery unit 200 to surround battery cells 204A-N. As a non-limiting example, in the embodiment of FIG. 2, the protective wrapping 212 is secured to first cooling pipe 224 and second cooling pipe 232 of cooling plate 216.

Still referring to FIG. 2, in embodiments, battery unit 200 can include cooling plate 216, wherein cooling plate 216 has a first surface and a second opposite and opposing surface. Cooling plate 216 may include any cooling pate as described above in further detail in reference to FIGs. 1A-B. The height of cooling plate 216 may not exceed the height of battery cells 204A-N, as described in the entirety of this disclosure. For example and without limitation, in the embodiment of FIG. 2, the cooling plate 216 is at a height that is equal to the height of each battery cell 204 of first column 208A and second column 208B. Cooling plate 216 may be composed of any suitable material, as described above in further detail in reference to FIGs. 1A-B. Cooling plate 216 is configured to include an indent in the component for each battery cell 204 coupled to the first surface and/or the second surface of cooling plate 216. Cooling plate 216 may be configured to facilitate the flow of a gas, wherein cooling plate 216 facilitates the gas to flow through one or more cooling pipe 224 and/or one or more second cooling pipe 232 to cool the plurality of battery cells 204A-N of first column 208A and second column 208B, as described in further detail in the entirety of this disclosure. Cooling plate 216 may be further configured to separate each battery cell 204 wherein separating each battery cell allows the gas to travel in between each battery cell 204 of first column 208A and second column 208B, as described in further detail in reference to FIGs. 1A-B. Persons skilled in the art, upon reviewing the entirety of this disclosure, will be aware of components that may be used as cooling plate consistently with this disclosure.

Continuing to refer to FIG. 2, cooling plate 216 includes a first end 220 comprising cooling pipe 224. Cooling pipe 224 may include any cooling pipe as described above in further detail in reference to FIGs. 1A-B. Cooling pipe 224 comprises an opening starting at a first end of cooling pipe 224 and terminating at a second end of cooling pipe 224. Cooling plate 216 is further configured to include a second end 228 comprising a second cooling pipe 232. Second cooling pipe 232 may include any cooling pipe as described above in further detail in reference to FIGs. 1A-B. Second cooling pipe 232 comprises an opening starting at a first end of second cooling pipe 232 and terminating at a second end of second cooling pipe 232. Cooling pipe 224 and/or second cooling pipe 232 may be composed utilizing any suitable material as discussed in the entirety of this disclosure. Cooling pipe 224 and/or second cooling pipe 232 may be configured to allow the passage of a gas from the first side 108 of the battery module 104 to the second opposite and opposing side 112 of the battery module 104, For example, cooling pipe 224 and/or second cooling pipe 232 can be disposed to allow the passage of gas through the hollow opening/void of cooling pipe 224 and/or second cooling pipe 232. The hollow opening/void of cooling pipe 224 and/or second cooling pipe 232 may be configured to be any size and/or diameter, as described above in further detail with reference to FIGs. 1A-B. For example and without limitation, in the instant embodiment, the hollow opening/void of cooling pipe 224 and/or second cooling pipe 232 is configured to have a diameter equal to the radius of battery cells 204A-N. According to embodiments, cooling pipe 224 is configured to be located at first end 220 of cooling plate 216. For example and without limitation, cooling pipe 224 may be in contact with each battery cell 204 of first column 208A and second column 208B located at the end of each column and/or row nearest to first end 220 of cooling plate 216. Second cooling pipe 232 is configured to be located at second end 228 of cooling plate 216. For example and without limitation second cooling pipe 232 may be in contact with each battery cell 204 of first column 208A and second column 208B located at the end of each column and/or row nearest to second end 228 of cooling plate 216. In the embodiment of FIG. 2, as a non-limiting example, battery unit 200 contains a first column 208A containing nine rows of battery cells 204A-N and a second column 208B containing nine rows of battery cells 204A- N. Further, cooling pipe 224 is disposed on a first end 220 of cooling plate 216 and is in contact with each battery cell 204A-N of first column 208A and second column 208B nearest to first end 220. Also, second cooling pipe 232 on second end 228 of cooling plate 216 is in contact with each battery cell 204 of first column 208A and each battery cell 204 of second column 208B nearest second end 228 of cooling plate 216.

Still referring to FIG. 2, according to the invention, the cooling pipe 224 or/and second cooling pipe 232 is configured to include cooling fin 240 on the interior surface of the hollow opening/void of cooling pipe 224 and/or second cooling pipe 232. A "cooling fin" as described herein, is a projection that increases the surface area from which heat can be radiated away by increasing the rate of heat transfer from the surrounding environment. For example and without limitation, increasing the surface area of the hollow tube/void of cooling pipe 224 and/or second cooling pipe 232 by a factor of two will increase the rate of heat transfer by a factor of two, wherein the heat is generated by each battery cell of the plurality of battery cells 204A-N. Cooling fin 240 may be composed utilizing any material as discussed in the entirety of this disclosure. Cooling fin 240, for example and without limitation, may be configured to extend the entire length of the interior surface of the hollow opening/void. For example and without limitation, cooling fin 240 extends from the first side 108 of battery module 104 to second opposite and opposing side 112 of battery module 104. As a further non-limiting example, cooling fin 240 may be configured to extend any length of the hollow opening/void of cooling pipe 224 and/or second cooling pipe 232, such that cooling fin 240 may only extend for 5mm in the center of the interior surface of the hollow opening/void of cooling pipe 224 and/or second cooling pipe 232. Cooling fin 240 may include any configuration on the interior surface of the hollow opening/void of cooling pipe 224 and/or second cooling pipe 232. Persons skilled in the art, upon reviewing the entirety of this disclosure, will be aware of components that may be used as the cooling fin consistently with this disclosure.

With continued reference to FIG. 2, cooling plate 216 of the embodiment of the battery unit 200 is further configured to include mounting channel 236. Mounting channel 236 may include any mounting channel as described above in further detail in reference to FIGs. 1A-B. Mounting channel 236 is configured to separate a least a portion of two or more battery cells 204A-N located on the first side of cooling plate 216 and second opposite and opposing side of cooling plate 216 respectively. Separating battery cells 204 may include maintaining a fixed distance of void space between each battery cell 204 of first column 208A and each battery cell 204 of second column 208B adjacent to each other on the same side of cooling plate 216. For example and without limitation, in the embodiment of FIG. 2, mounting channel 236 maintains a fixed distance of void space between battery cells 204A-N of first column 208A adjacent to each other on the first side of cooling plate 216 and battery cells 204A-N of second column 208B adjacent to each other on the second opposite and opposing side of cooling plate 216. Mounting channel 236 may be composed utilizing any suitable material as discussed in the entirety of this disclosure. Mounting channel 236 is configured to include an opening, wherein the opening starts at a first end of mounting channel 236 and terminating at a second end of mounting channel 236. Mounting channel 236 may be configured to allow the passage of a gas from the first side 108 of battery module 104 to the second opposite and opposing side 112 of battery module 104. For example and without limitation, mounting channel 236 can be disposed to allow the passage of gas through the opening of mounting channel 236. The gas may include any gas as described in further detail in the entirety of this disclosure.

Continuing to refer to FIG. 2, the opening of mounting channel 236 may be configured to be any size and/or diameter. For example and without limitation the diameter of the opening of mounting channel 236 correlates to the length of void space between each battery cell 204 of first column 208A and second column 208B disposed on the same side of the cooling plate 216. Mounting channel 236 is configured to include a slit, wherein the slit is positioned opposite and opposing the connection of mounting channel 236 to cooling plate 216, as described above in further detail in reference to FIGs. 1AB. The slit of mounting channel 236 is configured to extend the length of the opening of mounting channel 236 from the first side 108 of battery module 104 to the second opposite and opposing side 112 of battery module 104. The slit of mounting channel 236 may include any configuration along the mounting channel 236 extending from the first side 108 of battery module 104 to the second opposite and opposing side 112 of battery module 104. Mounting channel 236 may be further configured to include cooling fin 240 on the interior surface of the opening of mounting channel 236. The "interior surface" as used in this disclosure, is the surface of mounting channel 236 located inside the opening/void of mounting channel 236. Cooling fin 240 may include any cooling fin as described above in further detail. Cooling fin 240 may include any configuration on the interior surface of the opening of mounting channel 236. Cooling fin 240, for example and without limitation, may be configured to extend the entire length of the interior surface of the opening of mounting channel 236, wherein the cooling fin extends from the first side 108 of battery module 104 to the second opposite and opposing side 112 of battery module 104. As a further non-limiting example, cooling fin 240 may be configured to extend any length of the opening of mounting channel 236, such that cooling fin 240 may only extend for 1cm in the center of the interior surface of the opening of mounting channel 236.

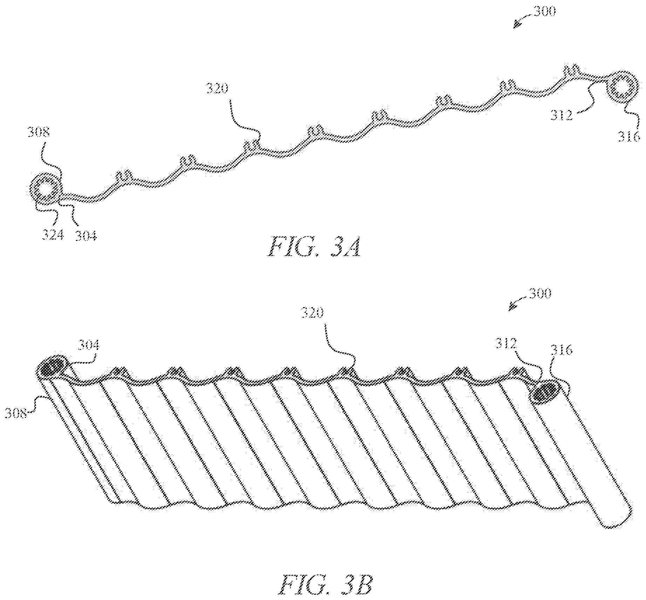

Referring now to FIGS. 3A-B, perspective views of an embodiment of cooling plate 300 is illustrated. Cooling plate 300 may include any cooling plate as described in further detail in the entirety of this disclosure. Cooling plate 300 is configured to include a first side and a second side. Cooling plate 300 further comprises a first end 304 comprising cooling pipe 312 and a second end 308 comprising second cooling pipe 318. Cooling pipe 312 and/or second cooling pipe 318 may include any cooling pipe as described above in further detail in reference to FIGs. 1A-2. Cooling plate 300 is further configured to include mounting channel 320 disposed on the first side of cooling plate 300. The embodiment of cooling plate 300 illustrates mounting channel 320 disposed only on the first side of cooling plate 300, however this is non-limiting and cooling plate 300 may include mounting channel 320 disposed on the second side of cooling plate 300. Mounting channel 320 may include any mounting channel as described above in further detail in reference to FIGs. 1A-2. Cooling plate 300 may be configured to include any curvature of the first side and/or second side of cooling plate 300. For example and without limitation the curvature of the first side and/or second side of cooling plate 300 correlates at least a portion of a first battery cell of the plurality of first battery cells 120A-N and/or at least a portion of a second battery cell of the plurality of second battery cells 124A-N. As a further example and without limitation, in an embodiment, cooling plate 300 is configured to include nine curves of the first surface of cooling plate 300, wherein each curve is configured to contain the at least a portion of the first battery cell of the plurality of battery cells 120A-N adjacent to the first surface of cooling plate 300. As a further example and without limitation, in the embodiment of FIGs. 3A-B cooling plate 300 is configured to include nine curves on the second surface of cooling plate 300 wherein each curve is configured to contain the at least a portion of a second battery cell of the plurality of battery cells 124A-N adjacent to the second surface of cooling plate 300.

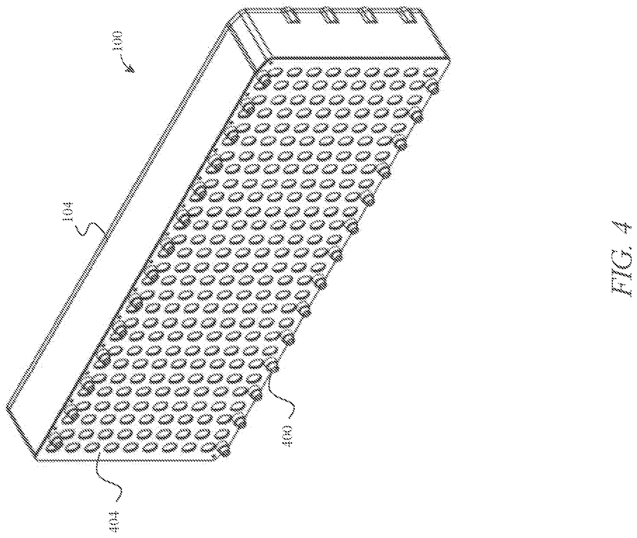

Referring now to FIG. 4, a perspective view of an embodiment of assembly 100 is illustrated. In embodiments, battery module 104 can be configured to include one or more adapter pins 400 disposed and coupled to the first side 108 of battery module 104. An "adapter pin" as described in the entirety of this disclosure is component, wherein the component is configured to couple to each of the cooling pipe 140 utilizing the hollow opening on the first side 108 of the battery module 104. Adapter pins 400 are configured to have a hollow shape comprising one or more sides, first and second opposite, opposing ends (e.g. a top and bottom, and a length, wherein the hollow shape comprises a shape having a void starting at a first end of the shape and terminating at an opposite, opposing second end of the shape. For example and without limitation, in the illustrative embodiment of FIG. 4, one or more adapter pins 400 comprises a tubular shape. The void of the hollow shape of adapter pins 400 is configured to form the hollow opening of adapter pins 400. In embodiments, adapter pin 400 may be composed of any material as described in the entirety of this disclosure. For example and without limitation, the n adapter pin may be composed of an electrically insulated material, such as PVC, glass, laminate, Teflon, rubber, polystyrene, polyisocyanurate, polyurethane, and the like, and/or any combination thereof. Adapter pin 400 can be disposed on battery module 104 such that it forms an open channel from the first side 108 of battery module 104 to an area external to battery module 104. Adapter pin 400 can further be disposed on battery module 104 such that it is configured to carry a gas from the hollow opening of a respective cooling pipe 140 to an area external the battery module, with the gas traveling through the hollow opening/void of adapter pin 400. The area external to battery module 104 may include, for example and without limitation, a second battery module, wherein adapter pin 400 is disposed on battery module 104 such that it is configured to carry the gas from the hollow opening of a respective cooling pipe 140 of battery module 104 to a hollow opening a respective cooling pipe of the second battery module directly opposite the battery module 104. As a further example and without limitation, the area external to the battery module 104 may include a gas containment apparatus, wherein adapter pin 400 is configured to carry the gas from the gas containment apparatus to the hollow opening of a respective cooling pipe 140 of battery module 104. The gas may include any gas as described above in further detail in reference to FIGS. 1A-3B. Persons skilled in the art, upon reviewing the entirety of this disclosure, will be aware of components that may be used as the n adapter pin consistently with this disclosure.

With continued reference to FIG. 4, the battery module 104 of assembly 100 is further configured to include sense board 404 coupled to the first side 108 of battery module 104. A "sense board" as described in the entirety of this disclosure is a printed circuit board substantially aligned with the first side 108 of battery module 104. In embodiments, sense board 404 can include a cell vent. The cell vent is configured to form an opening in sense board 404 that corresponds to a respective battery cell 120. In embodiments, there may be a cell vent disposed on sense board 404 for each battery cell 120A-N. The size of a cell vent can correlate to the plurality of battery cells 120AN. For example and without limitation, the diameter of a cell vent may be equal to the diameter of the plurality of battery cells 120A-N. As a further example and without limitation, the diameter of a cell vent may be equal to the radius of each battery cell of the plurality of battery cells 120A-N. In embodiments, sense board 404 can include an adapter hole. The adapter hole may include an opening in the sense board 404 corresponding to each hollow opening cooling pipes 136. Adapter pin 400 can be configured to couple to the hollow opening of a respective cooling pipe 140 by utilizing the adapter hole. For example and without limitation, the adapter pin 400 can be configured to insert through the adapter hole when coupling to the hollow opening of a cooling pipe 140 of cooling plate 136.

Still referring to FIG. 4, sense board 404 may further comprise a battery management system, wherein the battery management system may monitor the plurality of battery cells 120A-N in a plurality of ways. Sense board 404 may be further configured to comprise sensors configured to measure a temperature and as a whole is further configured to detect failure within each battery cell of the plurality of battery cells 120A-N. Cell failure may be characterized by a spike in temperature, wherein sense board 404 may be configured to detect the increase in temperature. Sense board 404 may be further configured to comprise sensors configured to measure a voltage and as a whole is further configured to detect a failure within first battery cells 120 and/or second battery cells 124. Cell failure may be further characterized by a spike and/or depletion in voltage, wherein sense board 404 may be configured to detect the increase and/or decrease in voltage. Sense board 404 may be further configured to generate signals to, as non-limiting examples, notify users, support personnel, safety personnel, maintainers, operators, emergency personnel, aircraft computers, or any combination thereof. Sense board 404 may be configured to comprise thermocouples, thermistors, thermometers, passive infrared sensors, resistance temperature sensors (RTD's), semiconductor based integrated circuits (IC), a combination thereof or another undisclosed sensor type, alone or in combination. Temperature, for the purposes of this disclosure, and as would be appreciated by someone of ordinary skill in the art, is a measure of the heat energy of a system. Heat energy is, at its core, the measure of kinetic energy of any or all matter present within a system. Temperature, as read by any number or combinations of sensors present on sense board 404, may be measured in Fahrenheit (°F), Celsius (°C), Kelvin (°K), or another scale alone or in combination. The temperature measured by sensors may comprise electrical signals which are transmitted to appropriate destination wireless or through a wired connection. Outputs from sensors or any other component present within system may be analog or digital. Onboard or remotely located processors can convert those output signals from sensor suite to a usable form by the destination of those signals. The usable form of output signals from sensors, through processor may be either digital, analog, a combination thereof or an otherwise unstated form. Processing may be configured to trim, offset, or otherwise compensate the outputs of the at least a sensor. Based on sensor output, the processor can determine the output to send to downstream component. Processor can include signal amplification, operational amplifier (OpAmp), filter, digital/analog conversion, linearization circuit, current-voltage change circuits, resistance change circuits such as Wheatstone Bridge, an error compensator circuit, a combination thereof or otherwise undisclosed components. Persons skilled in the art, upon reviewing the entirety of this disclosure, will be aware of battery management systems that may be used in combination with the sense board consistently with this disclosure.

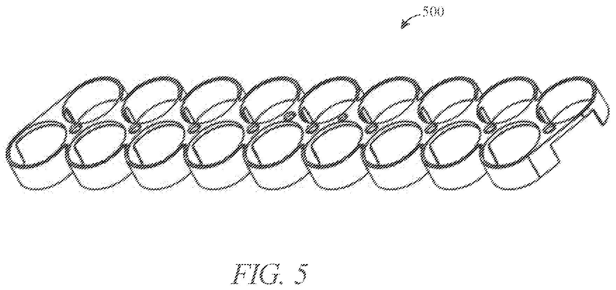

Referring now to FIG. 5, an embodiment of cell retainer 500 is illustrated. The battery module 104 may be configured to include cell retainer 500. A "cell retainer" is a component of the at least a battery unit 116A-N aligned on the first side 108 of battery module 104. Cell retainer 500 may be configured to be disposed on a top face of cooling plate 136, wherein the top face is in the same plane as the first side 108 of battery module 104. Further, cell retainer 500 may be configured to be disposed on a bottom face of cooling plate 136, wherein the bottom face is in the same plane as the second opposite and opposing side 112 of battery module 104. Cell retainer 500 may comprise an injection molded component. Injection molding may include any means of injection molding, as described in the entirety of this disclosure. Cell retainer 500 can be configured to align the plurality of battery cells 120A-N in a fixed position in battery module 104. Cell retainer 500 can be configured to comprise an opening corresponding to each battery cell of the plurality of battery cells 120A-N, wherein the opening may be mechanically coupled to an end of each battery cell of the plurality of battery cells 120A-N. The configuration of the openings of cell retainer 500 may include any configuration of the plurality of battery cells as described in the entirety of this disclosure. For example and without limitation, in the embodiment of FIG. 5, cell retainer 500 is configured to include openings for the arrangement of two columns of battery cells with nine batteries per column. Cell retainer 500 may include an opening corresponding to cooling plate 136 of a respective battery unit 116A-N. Cell retainer 500 may be further configured to align on the second side 112 of battery module 104. For example and without limitation, cell retainer 500 may be coupled to a first end of first battery cells 120 and/or second battery cells 124, wherein the first end of first battery cells 120 and second battery cells 124 is affixed to the first side 108 of battery module 104. As a further example and without limitation, cell retainer 500 may be coupled to a second end of first battery cells 120 and/or second battery cells 124, wherein the second end of first battery cells 120 and second battery cells 124 is affixed to the second opposite and opposing side 112 of battery module 104. Persons skilled in the art, upon reviewing the entirety of this disclosure, will be aware of components that may be used as a cell retainer consistently with this disclosure.

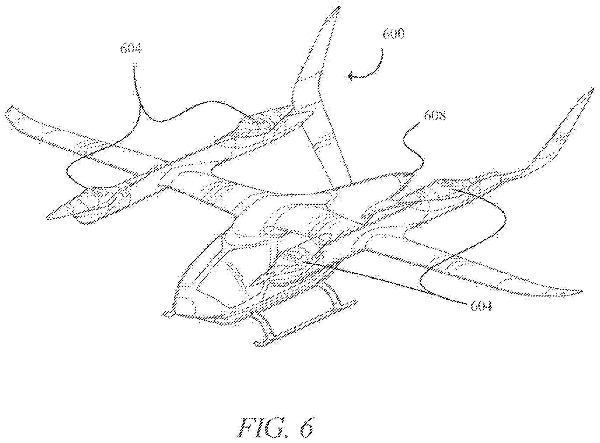

Referring now to FIG. 6, an isometric view of dual-mode aircraft 600 is presented. Aircraft 600 may be configured to have assembly 100 disposed in and/or on the aircraft. Dual-mode aircraft 600 can comprise an autonomous aircraft, a vertical take-off and landing aircraft, an electric take-off and landing aircraft, a quadcopter, a tilt-rotor aircraft, a fixed wing aircraft, a captured lift fan aircraft, a hovercraft, a combination thereof, or another aircraft not listed herein.

Continuing to refer to FIG. 6, in embodiments, dual-mode aircraft may include vertical propulsor 604 and forward propulsor 608. Forward propulsor 608 can comprise a propulsor configured to propel dual-mode aircraft 600 in a forward direction. Forward in this context is not an indication of the propulsor position on aircraft 600. In embodiments, one or more forward propulsors 608 can be mounted on the front, on the wings, at the rear, etc. of dual-mode aircraft 600. Vertical propulsor 604 can comprise a propulsor configured to propel the aircraft in an upward direction. One of ordinary skill in the art would understand upward to comprise the imaginary axis protruding from the earth at a normal angle, configured to be normal to any tangent plane to a point on a sphere (i.e. skyward). In embodiments, vertical propulsor 604 may be mounted on the front, on the wings, at the rear, and/or any suitable location of aircraft 600. A "propulsor", as used herein, is a component or device used to propel a craft by exerting force on a fluid medium, which may include a gaseous medium such as air or a liquid medium such as water. In an embodiment, vertical propulsor 604 can be a propulsor that generates a substantially downward thrust, tending to propel an aircraft in an opposite, vertical direction and provides thrust for maneuvers. Such maneuvers can include, without limitation, vertical take-off, vertical landing, hovering, and/or rotor-based flight such as "quadcopter" or similar styles of flight. According to embodiments, forward propulsor 608 can comprise a propulsor positioned for propelling an aircraft in a "forward" direction. Here, forward propulsor 608 may include one or more propulsors mounted on the front, on the wings, at the rear, or a combination of any such positions. Forward propulsor can be configured to propel aircraft 600 forward for fixed-wing and/or "airplane"-style flight, takeoff and/or landing, and/or may propel the aircraft forward or backward on the ground.

With continued reference to FIG. 6, in embodiments, vertical propulsor 604 and forward propulsor 608 may also each include a thrust element. A thrust element may include any device or component that converts mechanical energy of a motor, for instance in the form of rotational motion of a shaft, into thrust within a fluid medium. A thrust element may include, without limitation, a device using moving or rotating foils, including without limitation one or more rotors, an airscrew or propeller, a set of airscrews or propellers such as contra-rotating propellers, a moving or flapping wing, or the like. A thrust element may include without limitation a marine propeller or screw, an impeller, a turbine, a pump-jet, a paddle or paddle-based device, or the like. As another non-limiting example, a thrust element may include an eight-bladed pusher propeller, such as an eight-bladed propeller mounted behind the engine to ensure the drive shaft is in compression. Persons skilled in the art, upon reviewing the entirety of this disclosure, will be aware of various devices that may be used as a thrust element.

Still referring to FIG. 6, vertical propulsor 604 and forward propulsor 608 may also include a motor mechanically coupled to a respective propulsor as a source of thrust. Said motor may include, without limitation, any electric motor that comprises a device to convert electrical energy into mechanical energy, such as, for instance, by causing a shaft to rotate. A motor may be driven by direct current (DC) electric power-for instance, a motor may include a brushed DC a motor, or the like. In embodiments, a motor may be driven by electric power having varying or reversing voltage levels, such as alternating current (AC) power as produced by an AC generator, inverter, and/or otherwise varying power, such as produced by a switching power source. In embodiments, a motor may include, without limitation, brushless DC electric motors, permanent magnet synchronous motor, switched reluctance motors, induction motors, or any combination thereof. According to embodiments, a motor may include a driving circuit such as electronic speed controllers and/or any other components for regulating motor speed, rotation direction, and/or dynamic braking (i.e. reverse thrust).

It is to be noted that any one or more of the aspects and embodiments described herein may be conveniently implemented using one or more machines (*e*.*g*., one or more computing devices that are utilized as a user computing device for an electronic document, one or more server devices, such as a document server, etc.) programmed according to the teachings of the present specification, as will be apparent to those of ordinary skill in the computer art. Appropriate software coding can readily be prepared by skilled programmers based on the teachings of the present disclosure, as will be apparent to those of ordinary skill in the software art. Aspects and implementations discussed above employing software and/or software modules may also include appropriate hardware for assisting in the implementation of the machine executable instructions of the software and/or software module.

Such software may be a computer program product that employs a machine-readable storage medium. A machine-readable storage medium may be any medium that is capable of storing and/or encoding a sequence of instructions for execution by a machine (*e*.*g*., a computing device) and that causes the machine to perform any one of the methodologies and/or embodiments described herein. Examples of a machine-readable storage medium include, but are not limited to, a magnetic disk, an optical disc (*e.g.,* CD, CD-R, DVD, DVD-R, etc.), a magneto-optical disk, a read-only memory "ROM" device, a random access memory "RAM" device, a magnetic card, an optical card, a solid-state memory device, an EPROM, an EEPROM, and any combinations thereof. A machine-readable medium, as used herein, is intended to include a single medium as well as a collection of physically separate media, such as, for example, a collection of compact discs or one or more hard disk drives in combination with a computer memory. As used herein, a machine-readable storage medium does not include transitory forms of signal transmission.

Such software may also include information (*e*.*g*., data) carried as a data signal on a data carrier, such as a carrier wave. For example, machine-executable information may be included as a data-carrying signal embodied in a data carrier in which the signal encodes a sequence of instruction, or portion thereof, for execution by a machine (*e*.*g*., a computing device) and any related information (*e.g.,* data structures and data) that causes the machine to perform any one of the methodologies and/or embodiments described herein.

Examples of a computing device include, but are not limited to, an electronic book reading device, a computer workstation, a terminal computer, a server computer, a handheld device (*e.g.,* a tablet computer, a smartphone, etc.), a web appliance, a network router, a network switch, a network bridge, any machine capable of executing a sequence of instructions that specify an action to be taken by that machine, and any combinations thereof. In one example, a computing device may include and/or be included in a kiosk.

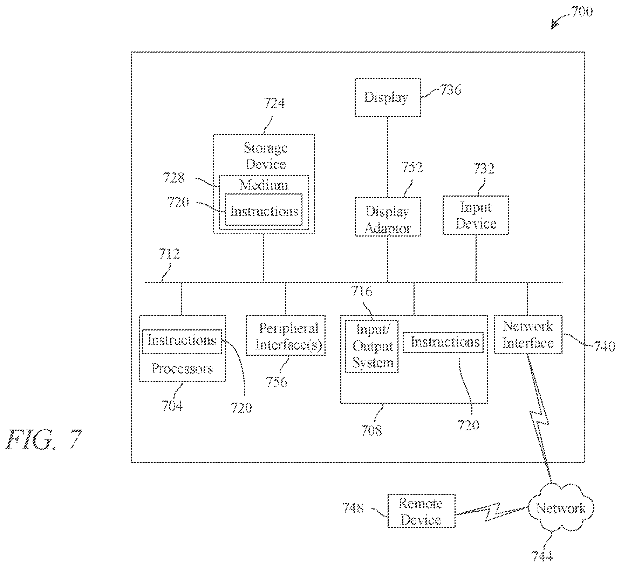

FIG. 7 shows a diagrammatic representation of one embodiment of a computing device in the exemplary form of a computer system 700 within which a set of instructions for causing a control system to perform any one or more of the aspects and/or methodologies of the present disclosure may be executed. It is also contemplated that multiple computing devices may be utilized to implement a specially configured set of instructions for causing one or more of the devices to perform any one or more of the aspects and/or methodologies of the present disclosure. Computer system 700 includes a processor 704 and a memory 708 that communicate with each other, and with other components, via a bus 712. Bus 712 may include any of several types of bus structures including, but not limited to, a memory bus, a memory controller, a peripheral bus, a local bus, and any combinations thereof, using any of a variety of bus architectures.

Processor 704 may include any suitable processor, such as without limitation a processor incorporating logical circuitry for performing arithmetic and logical operations, such as an arithmetic and logic unit (ALU), which may be regulated with a state machine and directed by operational inputs from memory and/or sensors; processor 704 may be organized according to Von Neumann and/or Harvard architecture as a non-limiting example. Processor 704 may include, incorporate, and/or be incorporated in, without limitation, a microcontroller, microprocessor, digital signal processor (DSP), Field Programmable Gate Array (FPGA), Complex Programmable Logic Device (CPLD), Graphical Processing Unit (GPU), general purpose GPU, Tensor Processing Unit (TPU), analog or mixed signal processor, Trusted Platform Module (TPM), a floating point unit (FPU), and/or system on a chip (SoC).

Memory 708 may include various components (*e*.*g*., machine-readable media) including, but not limited to, a random-access memory component, a read only component, and any combinations thereof. In one example, a basic input/output system 716 (BIOS), including basic routines that help to transfer information between elements within computer system 700, such as during start-up, may be stored in memory 708. Memory 708 may also include (*e*.*g*., stored on one or more machine-readable media) instructions (*e*.*g*., software) 720 embodying any one or more of the aspects and/or methodologies of the present disclosure. In another example, memory 708 may further include any number of program modules including, but not limited to, an operating system, one or more application programs, other program modules, program data, and any combinations thereof.

Computer system 700 may also include a storage device 724. Examples of a storage device (*e*.*g*., storage device 724) include, but are not limited to, a hard disk drive, a magnetic disk drive, an optical disc drive in combination with an optical medium, a solid-state memory device, and any combinations thereof. Storage device 724 may be connected to bus 712 by an appropriate interface (not shown). Example interfaces include, but are not limited to, SCSI, advanced technology attachment (ATA), serial ATA, universal serial bus (USB), IEEE 1394 (FIREWIRE), and any combinations thereof. In one example, storage device 724 (or one or more components thereof) may be removably interfaced with computer system 700 (*e.g.,* via an external port connector (not shown)). Particularly, storage device 724 and an associated machine-readable medium 728 may provide nonvolatile and/or volatile storage of machine-readable instructions, data structures, program modules, and/or other data for computer system 700. In one example, software 720 may reside, completely or partially, within machine-readable medium 728. In another example, software 720 may reside, completely or partially, within processor 704.

Computer system 700 may also include an input device 732. In one example, a user of computer system 700 may enter commands and/or other information into computer system 700 via input device 732. Examples of an input device 732 include, but are not limited to, an alpha-numeric input device (*e.g.,* a keyboard), a pointing device, a joystick, a gamepad, an audio input device (*e.g., a* microphone, a voice response system, etc.), a cursor control device (*e.g.,* a mouse), a touchpad, an optical scanner, a video capture device (*e.g.,* a still camera, a video camera), a touchscreen, and any combinations thereof. Input device 732 may be interfaced to bus 712 via any of a variety of interfaces (not shown) including, but not limited to, a serial interface, a parallel interface, a game port, a USB interface, a FIREWIRE interface, a direct interface to bus 712, and any combinations thereof. Input device 732 may include a touch screen interface that may be a part of or separate from display 736, discussed further below. Input device 732 may be utilized as a user selection device for selecting one or more graphical representations in a graphical interface as described above.

A user may also input commands and/or other information to computer system 700 via storage device 724 (*e.g.,* a removable disk drive, a flash drive, etc.) and/or network interface device 740. A network interface device, such as network interface device 740, may be utilized for connecting computer system 700 to one or more of a variety of networks, such as network 744, and one or more remote devices 748 connected thereto. Examples of a network interface device include, but are not limited to, a network interface card (*e.g.,* a mobile network interface card, a LAN card), a modem, and any combination thereof. Examples of a network include, but are not limited to, a wide area network (*e.g.,* the Internet, an enterprise network), a local area network (*e.g.,* a network associated with an office, a building, a campus or other relatively small geographic space), a telephone network, a data network associated with a telephone/voice provider (*e.g.,* a mobile communications provider data and/or voice network), a direct connection between two computing devices, and any combinations thereof. A network, such as network 744, may employ a wired and/or a wireless mode of communication. In general, any network topology may be used. Information (*e.g.,* data, software 720, etc.) may be communicated to and/or from computer system 700 via network interface device 740.

Computer system 700 may further include a video display adapter 752 for communicating a displayable image to a display device, such as display device 736. Examples of a display device include, but are not limited to, a liquid crystal display (LCD), a cathode ray tube (CRT), a plasma display, a light emitting diode (LED) display, and any combinations thereof. Display adapter 752 and display device 736 may be utilized in combination with processor 704 to provide graphical representations of aspects of the present disclosure. In addition to a display device, computer system 700 may include one or more other peripheral output devices including, but not limited to, an audio speaker, a printer, and any combinations thereof. Such peripheral output devices may be connected to bus 712 via a peripheral interface 756. Examples of a peripheral interface include, but are not limited to, a serial port, a USB connection, a FIREWIRE connection, a parallel connection, and any combinations thereof.

The foregoing has been a detailed description of illustrative embodiments of the invention. Features of each of the various embodiments described above may be combined with features of other described embodiments as appropriate in order to provide a multiplicity of feature combinations in associated new embodiments. Furthermore, while the foregoing describes a number of separate embodiments, what has been described herein is merely illustrative of the application of the principles of the present invention. Additionally, although particular methods herein may be illustrated and/or described as being performed in a specific order, the ordering is highly variable within ordinary skill to achieve methods, systems, and software according to the present disclosure. Accordingly, this description is meant to be taken only by way of example, and not to otherwise limit the scope of this invention.

Exemplary embodiments have been disclosed above and illustrated in the accompanying drawings.

## Claims

1. A cooling assembly for use in a battery module assembly, the assembly comprising:
a battery module (104) having first (108) and second (112) opposite, opposing sides and configured to house at least a portion of a battery unit (116A-N), wherein the battery unit (116A-N) comprises:
a first row of battery cells comprising a plurality of first battery cells (120A-N);
a second row of battery cells comprising a plurality of second battery cells (124A-N);
a cooling plate (136) having opposite, opposing sides and disposed between the first and second rows of battery cells such that at least a portion of each of the plurality of first battery cells (120A-N) are in contact with a first side of the cooling plate (136) and at least a portion of each of the second battery cells (124A-N) are in contact with a second opposite and opposing side of the cooling plate (136), wherein the cooling plate (136) further comprises:
a first end comprising a cooling pipe (140) comprising an opening staring at a first end of the cooling pipe (140) and terminating at a second opposite, opposing end of the cooling pipe (140);
a mounting channel (148) disposed on the first side of the cooling plate (136) and between at least a portion of a first battery cell of the plurality of first battery cells (120A-N) and at least a portion of a second battery of the plurality of first battery cells (120A-N); and
wherein the cooling pipe (140) is configured to include a cooling fin (240) disposed on an interior surface of the opening starting at the first end of the cooling pipe (140) and terminating at the second opposite, opposing end of the cooling pipe (140).

2. The assembly of claim 1, wherein the cooling plate (136) further comprises:
a second end comprising a second cooling pipe (144) comprising an opening starting at a first end of the second cooling pipe (144) and terminating at a second, opposing end of the second cooling pipe (144).

3. The assembly of claim 1, wherein the length of the mounting channel (148) is configured to be equal to the first battery cell of the plurality of first battery cells (120A-N).

4. The assembly of claim 1, wherein the cooling plate (136) is coupled to the battery unit.

5. The assembly of claim 1, wherein the mounting channel (148) further comprises an opening starting at a first end of the mounting channel (148) and terminating at a second opposite, opposing end of the mounting channel (148), wherein the mounting channel (148) comprises at least one of:
a slit included in the opening of the mounting channel (148) opposite the connection of the mounting channel (148) to the at least a cooling plate (136), the slit configured to extend along the length of the opening; and
a cooling fin (240) on the interior surface of the opening starting at the first side of the mounting channel (148) and terminating at the second opposite, opposing end of the mounting channel (148).

6. The assembly of claim 1, wherein the assembly further comprises: a sense board (404) coupled to the first side (108) of the battery module (104), wherein the sense board (404) further comprises:
a cell vent, the cell vent configured to include an opening in the sense board (404) corresponding to a respective battery cell of the plurality of battery cells; and
an adapter hole, the adapter hole is configured to include an opening in the sense board (404) corresponding to each hollow opening of the at least a cooling pipe (140).

7. The assembly of claim 6, wherein the sense board (404) is a printed circuit board.

8. The assembly of claim 1, wherein the assembly further comprises at least a cell retainer (500), wherein the at least a cell retainer (500) is configured to align the plurality of battery cells in a fixed position.

9. The assembly of claim 1, wherein the assembly further comprises at least a protective wrapping (132), wherein the at least a protective wrapping (132) is configured to surround the plurality of battery cells coupled to the first surface of the at least a cooling plate (136).

10. The assembly of claim 1, wherein the cooling pipe (140) is further configured to transmit a gas from the first side of the battery module to the second opposite and opposing side of the battery module, wherein the gas travels through the opening of the cooling pipe (140).

11. The assembly of claim 1, wherein the assembly further comprises a propulsor (604, 608), wherein the battery module is configured to provide power to the propulsor (604, 608).

12. The assembly of claim 1, wherein the battery module is affixed to an electric aircraft.

## Patentansprüche

1. Kühlanordnung zur Verwendung in einer Batteriemodulanordnung, wobei die Anordnung Folgendes umfasst:
ein Batteriemodul (104) mit einer ersten (108) und einer zweiten (112) entgegengesetzten, einander gegenüberliegenden Seiten und dazu ausgelegt, mindestens einen Teil einer Batterieeinheit (116A-N) aufzunehmen, wobei die Batterieeinheit (116A-N) Folgendes umfasst:
eine erste Reihe von Batteriezellen, die mehrere erste Batteriezellen (120A-N) umfasst;
eine zweite Reihe von Batteriezellen, die mehrere zweite Batteriezellen (124A-N) umfasst;
eine Kühlplatte (136), die entgegengesetzte, einander gegenüberliegende Seiten aufweist und zwischen der ersten und der zweiten Reihe von Batteriezellen angeordnet ist, so dass mindestens ein Teil jeder der mehreren ersten Batteriezellen (120A-N) in Kontakt mit einer ersten Seite der Kühlplatte (136) ist und mindestens ein Teil jeder der zweiten Batteriezellen (124A-N) in Kontakt mit einer zweiten entgegengesetzten und gegenüberliegenden Seite der Kühlplatte (136) ist, wobei die Kühlplatte (136) ferner Folgendes umfasst:
ein erstes Ende, das ein Kühlrohr (140) umfasst, das eine Öffnung umfasst, die zu einem ersten Ende des Kühlrohrs (140) zeigt und an einem zweiten entgegengesetzten, gegenüberliegenden Ende des Kühlrohrs (140) endet;
einen Befestigungskanal (148), der auf der ersten Seite der Kühlplatte (136) und zwischen mindestens einem Teil einer ersten Batteriezelle der mehreren ersten Batteriezellen (120A-N) und mindestens einem Teil einer zweiten Batterie der mehreren ersten Batteriezellen (120A-N) angeordnet ist; und
wobei das Kühlrohr (140) dazu ausgelegt ist, eine Kühlrippe (240) zu beinhalten, die auf einer Innenfläche der Öffnung angeordnet ist, beginnend am ersten Ende des Kühlrohrs (140) und endend am zweiten entgegengesetzten, gegenüberliegenden Ende des Kühlrohrs (140).

2. Anordnung nach Anspruch 1, wobei die Kühlplatte (136) ferner Folgendes umfasst:
ein zweites Ende, das ein zweites Kühlrohr (144) umfasst, das eine Öffnung umfasst, die an einem ersten Ende des zweiten Kühlrohrs (144) beginnt und an einem zweiten, gegenüberliegenden Ende des zweiten Kühlrohrs (144) endet.

3. Anordnung nach Anspruch 1, wobei die Länge des Befestigungskanals (148) so ausgelegt ist, dass sie gleich der ersten Batteriezelle der mehreren ersten Batteriezellen (120A-N) ist.

4. Anordnung nach Anspruch 1, wobei die Kühlplatte (136) mit der Batterieeinheit gekoppelt ist.

5. Anordnung nach Anspruch 1, wobei der Befestigungskanal (148) ferner eine Öffnung umfasst, die an einem ersten Ende des Befestigungskanals (148) beginnt und an einem zweiten entgegengesetzten, gegenüberliegenden Ende des Befestigungskanals (148) endet, wobei der Befestigungskanal (148) mindestens eines von Folgendem umfasst:
einen Schlitz, der in der Öffnung des Befestigungskanals (148) gegenüber der Verbindung des Befestigungskanals (148) mit der mindestens einen Kühlplatte (136) enthalten ist, wobei der Schlitz dazu ausgelegt ist, sich entlang der Länge der Öffnung zu erstrecken; und
eine Kühlrippe (240) auf der Innenfläche der Öffnung, die an der ersten Seite des Befestigungskanals (148) beginnt und an dem zweiten entgegengesetzten, gegenüberliegenden Ende des Befestigungskanals (148) endet.

6. Anordnung nach Anspruch 1, wobei die Anordnung ferner Folgendes umfasst: eine Sensorplatine (404), die mit der ersten Seite (108) des Batteriemoduls (104) gekoppelt ist, wobei die Sensorplatine (404) ferner Folgendes umfasst:
eine Zellentlüftung, wobei die Zellentlüftung dazu ausgelegt ist, eine Öffnung in der Sensorplatine (404) zu beinhalten, die einer jeweiligen Batteriezelle der mehreren Batteriezellen entspricht; und
ein Adapterloch, wobei das Adapterloch dazu ausgelegt ist, eine Öffnung in der Sensorplatine (404) zu beinhalten, die jeder hohlen Öffnung des mindestens einen Kühlrohrs (140) entspricht.

7. Anordnung nach Anspruch 6, wobei die Sensorplatine (404) eine Leiterplatte ist.

8. Anordnung nach Anspruch 1, wobei die Anordnung ferner mindestens einen Zellenhalter (500) umfasst, wobei der mindestens eine Zellenhalter (500) dazu ausgelegt ist, die mehreren Batteriezellen in einer festen Position auszurichten.

9. Anordnung nach Anspruch 1, wobei die Anordnung ferner mindestens eine Schutzhülle (132) umfasst, wobei die mindestens eine Schutzhülle (132) dazu ausgelegt ist, die mehreren Batteriezellen, die mit der ersten Oberfläche der mindestens einen Kühlplatte (136) gekoppelt sind, zu umgeben.

10. Anordnung nach Anspruch 1, wobei das Kühlrohr (140) ferner dazu ausgelegt ist, ein Gas von der ersten Seite des Batteriemoduls zu der zweiten entgegengesetzten und gegenüberliegenden Seite des Batteriemoduls zu übertragen, wobei sich das Gas durch die Öffnung des Kühlrohrs (140) bewegt.

11. Anordnung nach Anspruch 1, wobei die Anordnung ferner eine Antriebseinrichtung (604, 608) umfasst, wobei das Batteriemodul dazu ausgelegt ist, der Antriebseinrichtung (604, 608) Leistung bereitzustellen.

12. Anordnung nach Anspruch 1, wobei das Batteriemodul an einem elektrischen Flugzeug befestigt ist.

## Revendications

1. Ensemble de refroidissement pour utilisation dans un ensemble module de batterie, l'ensemble comprenant :
un module de batterie (104) ayant des premier (108) et second (112) côtés opposés en regard et conçus pour loger au moins une partie d'une unité de batterie (116A-N), l'unité de batterie (116A-N) comprenant :
une première rangée d'éléments de batterie comprenant une pluralité de premiers éléments de batterie (120A-N) ;
une seconde rangée d'éléments de batterie comprenant une pluralité de seconds éléments de batterie (124A-N) ;
une plaque de refroidissement (136) présentant des côtés opposés en regard et disposée entre les première et seconde rangées d'éléments de batterie de sorte qu'au moins une partie de chacun des premiers éléments de batterie (120A-N) soit en contact avec un premier côté de la plaque de refroidissement (136) et qu'au moins une partie de chacun des seconds éléments de batterie (124AN) soit en contact avec un second côté opposé en regard de la plaque de refroidissement (136), la plaque de refroidissement (136) comprenant en outre :
une première extrémité comprenant un tuyau de refroidissement (140) comportant une ouverture regardant une première extrémité du tuyau de refroidissement (140) et se terminant au niveau d'une seconde extrémité opposée en regard du tuyau de refroidissement (140) ;
un canal de montage (148) situé sur le premier côté de la plaque de refroidissement (136) et entre au moins une partie d'un premier élément de batterie de la pluralité de premiers éléments de batterie (120A-N) et au moins une partie d'une seconde batterie de la pluralité de premiers éléments de batterie (120A-N) ; et
le tuyau de refroidissement (140) étant conçu pour comprendre une ailette de refroidissement (240) située sur une surface intérieure de l'ouverture commençant au niveau de la première extrémité du tuyau de refroidissement (140) et se terminant au niveau de la seconde extrémité opposée en regard du tuyau de refroidissement (140).

2. Ensemble selon la revendication 1, la plaque de refroidissement (136) comprenant en outre :
une seconde extrémité comprenant un second tuyau de refroidissement (144) comportant une ouverture commençant au niveau d'une première extrémité du second tuyau de refroidissement (144) et se terminant au niveau d'une seconde extrémité opposée en regard du second tuyau de refroidissement (144).

3. Ensemble selon la revendication 1, la longueur du canal de montage (148) étant conçue pour être égale au premier élément de batterie de la pluralité de premiers éléments de batterie (120A-N).

4. Ensemble selon la revendication 1, la plaque de refroidissement (136) étant accouplée à l'unité de batterie.

5. Ensemble selon la revendication 1, le canal de montage (148) comprenant en outre une ouverture commençant au niveau d'une première extrémité du canal de montage (148) et se terminant au niveau d'une seconde extrémité opposée en regard du canal de montage (148), le canal de montage (148) comprenant au moins l'une parmi :
une fente comprise dans l'ouverture du canal de montage (148) à l'opposé de la liaison du canal de montage (148) à l'au moins une plaque de refroidissement (136), la fente étant conçue pour s'étendre sur la longueur de l'ouverture ; et
une ailette de refroidissement (240) sur la surface intérieure de l'ouverture commençant au niveau du premier côté du canal de montage (148) et se terminant au niveau de la seconde extrémité opposée en regard du canal de montage (148).

6. Ensemble selon la revendication 1, l'ensemble comprenant en outre : une carte de détection (404) accouplée au premier côté (108) du module de batterie (104), la carte de détection (404) comprenant en outre :
un évent d'élément, l'évent d'élément étant conçu pour comprendre une ouverture dans la carte de détection (404) correspondant à un élément de batterie respectif de la pluralité d'éléments de batterie ; et
un trou d'adaptateur, le trou d'adaptateur étant conçu pour comprendre une ouverture dans la carte de détection (404) correspondant à chaque ouverture creuse de l'au moins un tuyau de refroidissement (140).

7. Ensemble selon la revendication 6, la carte de détection (404) étant une carte de circuit imprimé.

8. Ensemble selon la revendication 1, l'ensemble comprenant en outre au moins un élément de retenue d'élément (500), l'au moins un élément de retenue d'élément (500) étant conçu pour aligner la pluralité d'éléments de batterie dans une position fixe.

9. Ensemble selon la revendication 1, l'ensemble comprenant en outre au moins une enveloppe protectrice (132), l'au moins une enveloppe protectrice (132) étant conçue pour entourer la pluralité d'éléments de batterie accouplés à la première surface de l'au moins une plaque de refroidissement (136).

10. Ensemble selon la revendication 1, le tuyau de refroidissement (140) étant en outre conçu pour transmettre un gaz du premier côté du module de batterie au second côté opposé en regard du module de batterie, le gaz se déplaçant à travers l'ouverture du tuyau de refroidissement (140).

11. Ensemble selon la revendication 1, l'ensemble comprenant en outre un propulseur (604, 608), le module de batterie étant conçu pour fournir de l'énergie au propulseur (604, 608).

12. Ensemble selon la revendication 1, le module de batterie étant fixé à un aéronef électrique.
